# EUROPÄISCHE PATENTSCHRIFT

(11) **EP 1 130 384 B1**
(45) Veröffentlichungstag und Bekanntmachung des Hinweises auf die Patenterteilung: **14.05.2003**
(21) Anmeldenummer: 01112238.9
(22) Anmeldetag: 29.07.1994
(51) Int. Cl.: G01N 21/90, B07C 5/12, B07C 5/34

(54) **Inspektionsmaschine**
Inspecting machine
Machine de contrôle

(30) Priorität: 30.07.1993 DE 9311405 U; 01.09.1993 DE 9313115 U
(43) Veröffentlichungstag der Anmeldung: 05.09.2001
(62) Teilanmeldung aus: 94924822.3
(73) Patentinhaber: KRONES AG, 93068 Neutraubling (DE)
(72) Erfinder: Kronseder, Hermann, Dr.-Ing. E.h., 93086 Wörth/Donau (DE); Häring, Franz, 93073 Neutraubling (DE); Griesbeck, Karl, 93053 Regensburg (DE); Ruppelt, Wolfgang, 93176 Beratzhausen (DE)

(56) Entgegenhaltungen:
- EP-A- 0 037 694
- US-A- 3 932 042
- US-A- 4 025 201
- US-A- 4 280 624
- US-A- 4 586 080
- US-A- 5 256 871

## Beschreibung

Die Erfindung betrifft eine Inspektionsmaschine für durchleuchtbare Flaschen oder dergleichen gemäß dem Oberbegriff des Anspruchs 1.

In Getränkeabfüllinien werden derartige Inspektionsmaschinen eingesetzt, um vor dem Befüllen beschädigte oder unsaubere Flaschen zu erkennen und auszuscheiden. Zur Überprüfung des Seitenwandbereiches der Flaschen sind Inspektionssysteme bekannt, die zur Bildaufnahme der Flaschenseitenwand eine kontinuierliche Drehung um ihre Hochachse erfordern. Während der Drehbewegung wird von der Bildaufnahmeeinrichtung, z.B. Zeilenkamera, im wesentlichen nur die Flaschenmitte entlang einer vertikalen Linie aufgenommen. Das durch dieses Abwicklungsverfahren erhaltene Bild einer Flaschenseitenwand zeichnet sich durch eine hohe Aufnahmequalität aus, da praktisch keine optischen Verzerrungen durch die Seitenwandkrümmung auftreten. Andererseits erfordert die Drehung der Flaschen zur Bildaufnahme einen nicht unerheblichen mechanischen Aufwand (Karussell mit Drehtellern o.ä.).

Außerdem ist bereits eine Inspektionsvorrichtung bekanntgeworden, die ohne eine Flaschendrehung während der Bildaufnahme des Seitenwandbereichs auskommt (DE-AS 26 17 457). Dabei wird der Seitenwandbereich von nur einer Kamera aus zwei verschiedenen Richtungen aufgenommen. Einerseits besitzt eine derartige Inspektionseinrichtung einen vergleichsweise einfachen Aufbau, andererseits müssen aber durch die Oberflächenkrümmung der Flasche verursachte optische Verzerrungen in den Randbereichen der aufgenommenen Bilder in Kauf genommen werden, wodurch die Bildauswertung zur Erkennung von Schmutz oder Beschädigungen erschwert wird.

Eine weitere Inspektionsvorrichtung für Flaschen ist aus EP-A-0 037 694 bekannt, wobei diese Vorrichtung mit einer Scannerbeleuchtung arbeitet. Der von einer punktförmigen Lichtquelle ausgehende Lichtstrahl wird durch halbdurchlässige Spiegel in drei aus verschiedenen Richtungen auf eine zu prüfende Flasche auftreffende Lichtstrahlen aufgeteilt. Alle Spiegel sind zwischen der Lichtquelle und der Flasche positioniert. Auf der der Lichtquelle gegenüberliegenden Seite der Flaschenförderbahn ist in Verlängerung jedes durch eine transparente Flasche dringenden Lichtstrahls jeweils eine eigene Bildaufnahmeeinrichtung angeordnet. Um die Flaschen über ihre gesamte Höhe inspizieren zu können, wird der von der Lichtquelle ausgehende Lichtstrahl vertikal bewegt. Diese Lösung mit Scannerbeleuchtung und mehreren Bildaufnehmern verursacht zusätzliche Kosten.

Demzufolge liegt der Erfindung die Aufgabe zugrunde, eine Inspektionsvorrichtung zur Seitenwandkontrolle von Flaschen oder dergleichen anzugeben, die nur wenig Aufwand erfordert und eine gute Bildqualität liefert.

Die Aufgabe wird durch die im kennzeichnenden Teil des Anspruchs 1 angegebenen Merkmale gelöst.

Besonders vorteilhaft ist eine Spiegelanordnung, die gleich lange Strahlengänge vom Seitenwandbereich einer zu prüfenden Flasche bis zur Bildaufnahmeenrichtung (CCD-Kamera) liefert. Dadurch kann sichergestellt werden, dass die von den einzelnen Strahlengängen geliefert Abbildungen gleich groß sind, wodurch Schwierigkeiten bei der Bildauswertung vermieden werden.

Eine besonders kompakte Bauweise wird durch eine in den Ansprüchen 11 und 12 angegebene Ausgestaltung der Inspektionseinrichtung ermöglicht.

Ferner kann der Inspektionsstation eine weitere; Bildaufnahmeeinrichtung (CCD-Kamera) zur Kontrolle der Kontur, Höhe oder Farbe der die Inspektionsstation passierenden Flaschen zugeordnet werden. Diese zweite Bildaufnahmeeinrichtung kann so positioniert werden, dass ihr Strahlengang ebenfalls den Kreuzungsbereich der Strahlengänge der Seitenwandkontrolle schneidet, wodurch vorteilhafter Weise durch nur eine Ansteuerung die Bildaufnahme beider Bildaufnahmeeinrichtungen gleichzeitig auslösbar ist.

Vorteilhafte Weiterbildungen der Inspektionsmaschine sind Gegenstand der Unteransprüche.

Nachfolgend werden Ausführungsbeispiele anhand der Figuren erläutert. Es zeigt:
- Fig. 1: eine schematische Draufsicht auf eine Inspektionsmaschine mit einer Inspektionsstation zur Seitenwandkontrolle,
- Fig. 2: eine vergrößerte Darstellung der Inspektionsstation zur Seitenwandkontrolle nach Fig. 1,
- Fig. 3: eine erste Seitenansicht der Inspektionsstation nach Fig. 2 in Flaschenförderrichtung betrachtet,
- Fig. 4: eine zweite Seitenansicht der Inspektionsstation nach Fig. 2 in Förderrichtung der Flaschen betrachtet,
- Fig. 5: eine dritte Seitenansicht der Inspektionsstation nach Fig. 2 in Förderrichtung der Flaschen betrachtet,
- Fig. 6: eine schematische Draufsicht auf eine Inspektionsstation zur Seitenwandkontrolle mit einer von Fig. 2 abweichenden Spiegelanordnung und
- Fig. 7: eine schematische Draufsicht auf eine Inspektionsmaschine mit zwei Inspektionsstationen zur Seitenwandkontrolle von Flaschen.

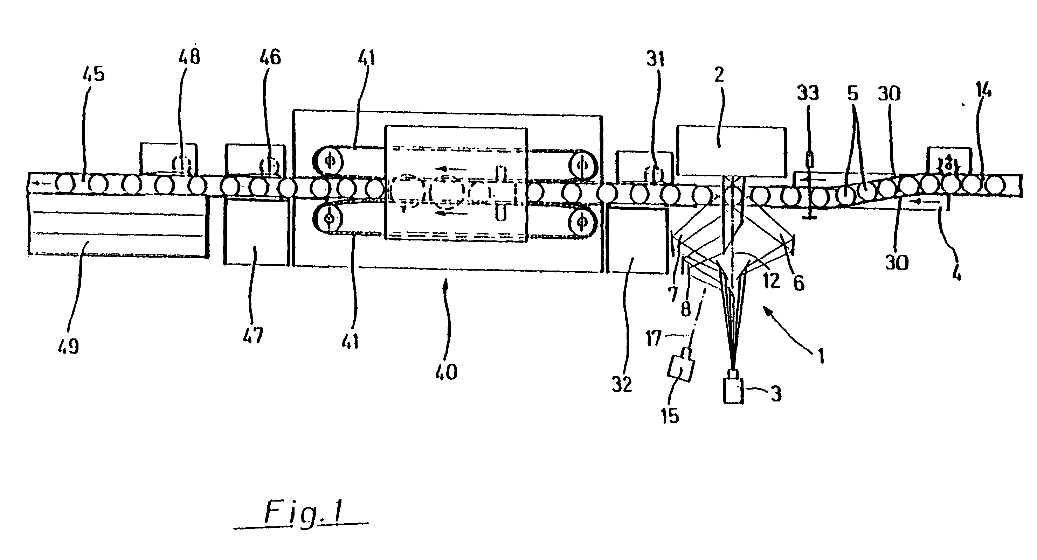

Wie aus der in der Fig. 1 schematisch dargestellten Draufsicht erkennbar ist, werden die zu prüfenden Flaschen 5 durch einen kontinuierlich antreibbaren Zuförderer 14 der Inspektionsmaschine zugeführt. Die durch den Zuförderer 14, z.B. ein Plattenförderband, in einer geschlossenen Reihe aufrechtstehend transportierten Flaschen 5 werden durch Führungsgeländer 30 auf ein parallel angeordnetes, mit erhöhter Geschwindigkeit synchron zum Zuförderer 14 angetriebenes Förderband 4 überführt, wobei durch den Geschwindigkeitssprung Lücken bzw. Zwischenabstände im Flaschenstrom erzeugt werden. Diese Zwischenabstände sind zur Durchführung der Seitenwandkontrolle notwendig.

Die Seitenwandkontrolle erfolgt durch eine am Förderband 4 angeordnete Inspektionsstation 1, die im wesentlichen aus einem diffuses Licht abstrahlenden Leuchtschirm 2, einer Kamera 3 und zwischen dem Förderband 4 und der Kamera 3 angeordneten Spiegeln zur Erzeugung der Strahlengänge 6, 7 und 8 besteht. Außerdem ist die Inspektionsstation 1 mit einer zweiten Kamera 15 zur Kontur-, Höhen- und/oder Farberkennung ausgestattet. In Förderrichtung gesehen hinter der Inspektionsstation 1 ist eine ansteuerbare Auswerfereinrichtung 31 an einer Seite des Transportbandes 4 plaziert, der gegenüberliegend ein Auffangbehälter 32 zugeordnet ist. Mit der Auswerfereinrichtung 31, z.B. ein quer zur Förderrichtung impulsartig vor- und zurücksteuerbarer Pusher oder Stößel, können durch die zweite Kamera 15 erkannte Fremdflaschen, die beispielsweise einen bestimmten Durchmesser oder eine vorgebbare Höhe überschreiten, zum Schutz nachfolgender Inspektionseinrichtungen vom Förderband 4 entfernt werden. Die Ansteuerung der beiden Kameras 3, 15 und der Auswerfereinrichtung 31 erfolgt unter Berücksichtigung der Fördergeschwindigkeit durch eine der Inspektionsstation 1 vorgeordnete Triggerlichtschranke 33.

Der Inspektionsstation 1 zur Seitenwandkontrolle ist außerdem eine zweite Inspektionsstation 40 nachgeordnet. In dieser Inspektionsstation können die Flaschen 5 durch zwei gegenüberliegend angeordnete, synchron zum Förderband 4 antreibbare Riemen 41 seitlich an der Mantelfläche eingeklemmt und bodenfrei über mehrere Inspektionseinrichtungen zur Boden-, Mündungskontrolle oder Restflüssigkeitserkennung transportiert werden. Nach Abschluß dieser Inspektionsvorgänge werden die Flaschen von den Riemen 41 auf ein nachfolgendes Förderband 45 abgestellt und freigegeben.

Hinter der zweiten Inspektionsstation 40 ist wiederum eine ansteuerbare Auswerfereinrichtung 46 mit einem gegenüberliegend am Transportband 45 angeordneten Auffangbehälter 47 plaziert, um durch die erste oder zweite Inspektionsstation 1, 40 als nicht weiterverwendbar erkannte Flaschen, z.B. mit Ausbrüchen an der Mündung, ausscheiden zu können. Dahinterliegend ist eine dritte Auswerfereinrichtung 48 zur Ausschleusung von evtl. nach einer erneuten Reinigung weiter verwendbaren Flaschen auf einen parallel zum Förderband 45 angeordneten Förderer 49 vorgesehen.

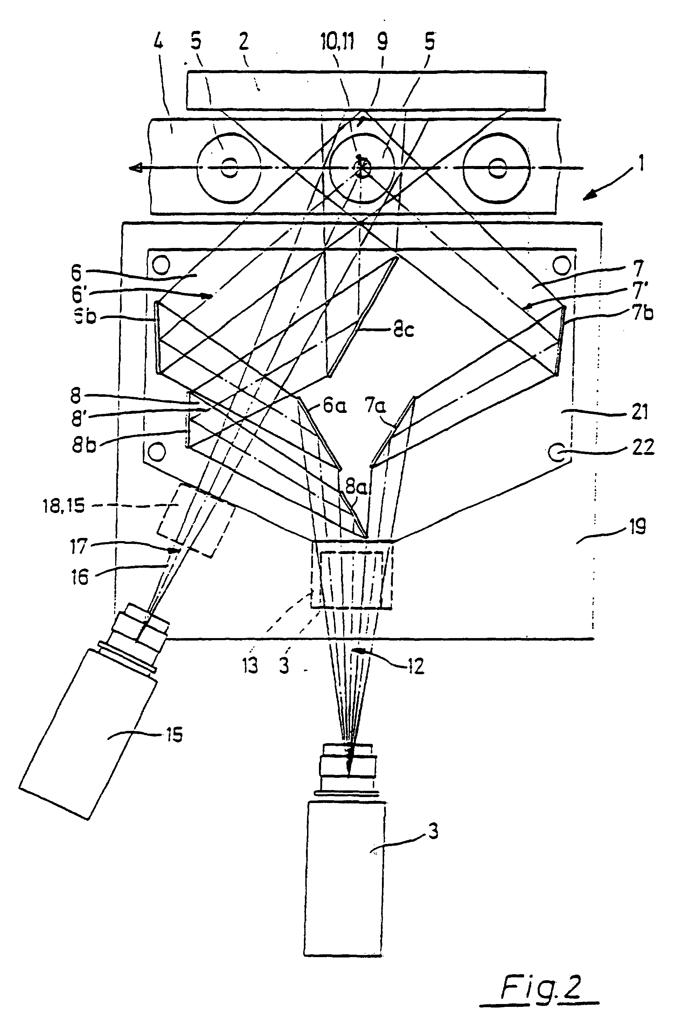

Aus der Fig. 2 ist die Anordnung der die drei Strahlengänge 6, 7, 8 erzeugenden Spiegel ersichtlich. Die beiden Strahlengänge 6 und 7 sind zur optischen Achse 12 der Kamera 3 symmetrisch zu den Spiegeln 6a und 6b des Strahlenganges 6 positioniert. Die beiden Spiegel 6b und 7b sind so zueinander ausgerichtet, daß sich die Strahlengänge 6 und 7 unter einem bestimmten Winkel, z.B. 60 Grad, bezogen auf die Mittelachsen 6' und 7' der Strahlengänge, in einem über dem Förderband 4 liegenden Kreuzungsbereich 9 treffen. Ein dritter Strahlengang 8 wird, ausgehend von der Kamera 3, durch drei Spiegel 8a, 8b, 8c, so umgelenkt, daß die Mittelachse 8' dieses dritten Strahlenganges 8 im Kreuzungsbereich 9 den von den beiden Mittelachsen 6' und 7' eingeschlossenen Winkel halbiert. Der Spiegel 8c ist so positioniert, daß die in Fig. 2 dargestellte senkrechte Projektion der Mittelachse 8' an der gemeinsamen Schnittstelle 10 der drei Mittelachsen 6', 7' und 8' sowohl normal zur Symmetrielinie 11 der zu prüfenden Flasche 5 als auch zur Förderrichtung des Förderbandes 4 ausgerichtet ist. Die für die Seitenwandkontrolle zuständige Kamera 3 ist mit einem Flächenarray ausgestattet, auf dem die drei Strahlengänge 6, 7 und 8 nebeneinander abgebildet werden. Der Kamera 3 ist eine nicht dargestellte Auswerteinrichtung zugeordnet, die das von der Kamera aufgenommene Bild programmgesteuert auswertet. Das Auswertprogramm kann so gestaltet sein, daß von jedem Strahlengang jeweils nur der mittlere Bildbereich ausgewertet wird, während die Randbereiche ausblendbar sind bzw. ignoriert werden, um Ungenauigkeit in den Randbereichen der aufgenommenen Bilder infolge der optischen Verzerrungen an den stark gekrümmten Flaschenrändern zu vermeiden.

Außerdem ist der Inspektionsstation 1 eine zweite Kamera 15 zur Kontrolle der Kontur- und/oder Höhe und/oder Farbe der zu prüfenden Flaschen zugeordnet. Diese zweite Kamera 15 ist so angeordnet, dass ihr Strahlengang 16 ungehindert zwischen den Spiegeln der Seitenwandkontrolleinrichtung hindurch auf eine sich gerade im Kreuzungsbereich 9 befindende Flasche 5 treffen kann. Insbesondere ist die optische Achse 17 der Kamera 15 so ausgerichtet, dass sie ebenfalls durch die gemeinsame Schnittstelle 10 der drei Strahlengänge 6, 7 und 8 der Seitenwandkontrolle verläuft. Dadurch sind die beiden Kameras 3 und 15 mit einem gemeinsamen Steuersignal zur gleichzeitigen Bildaufnahme ansteuerbar. Besonders günstig ist eine Anordnung des Strahlengangs 16 der Kamera 15, bei der die senkrechte Projektion der optischen Achse 17 die senkrechte Projektion der Mittelachse 8' bzw. die optische Achse 12 der Kamera 3 mit einem Winkel von ca. 25 Grad kreuzt.

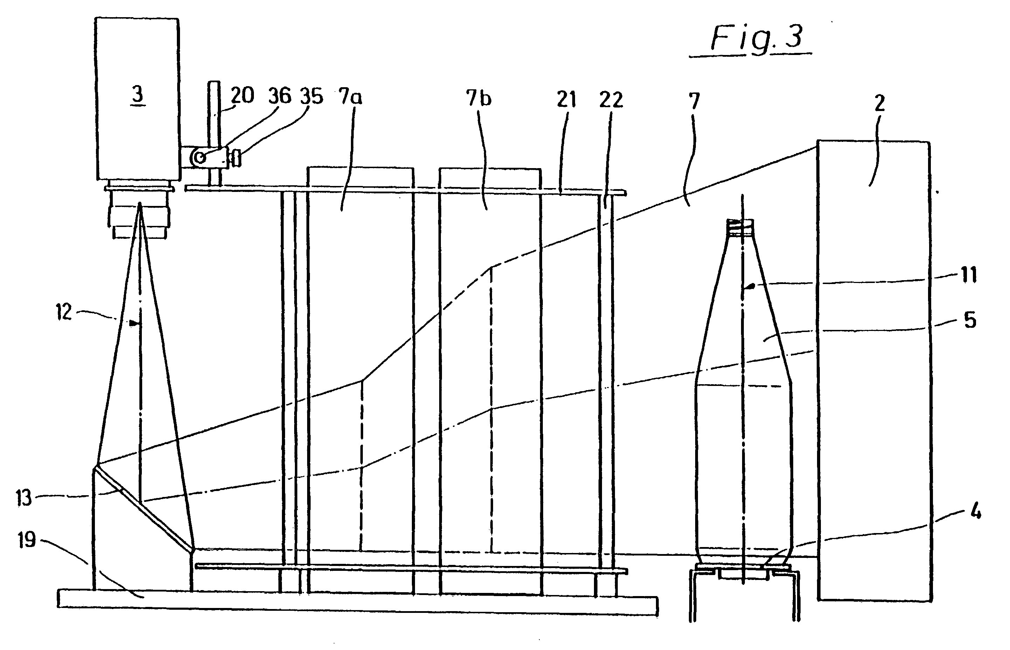

Abweichend von der Darstellung in Fig. 2 können die beiden Kameras 3 und 15 mit ihren optischen Achsen 12 und 17 senkrecht zur Förderebene der Flaschen stehend angeordnet werden. Diese Alternative ist in der Fig. 2 mit gestrichelten Umrißlinien angedeutet und in den Fig. 3 bis 5 dargestellt.

Diese Anordnung gestattet eine sehr kompakte, platzsparende Bauweise der Inspektionsstation 1, da der quer zum Förderband 4 erforderliche Abstand im Vergleich zur Ausführung nach Fig. 2 deutlich verkürzt werden kann.

In der in Fig. 3 dargestellten Seitenansicht der Fig. 2 sind zwecks der besseren Übersicht nur die Kamera 3 und die beiden dem Strahlengang 7 zugeordneten Spiegel 7a und 7b dargestellt. Eingezeichnet ist der Strahlenverlauf der in Fig. 2 mit 7' bezeichneten Mittelachse. Die Positionierung der ebenen Spiegel 7a und 7b (und auch der übrigen Spiegel) erfolgt durch zwei mit Abstand zueinander parallel, jeweils in einer horizontalen Ebene liegende Positionierplatten 21, die durch Distanzstangen 22 auf einer Grundplatte 19 befestigt sind. Die Positionierplatten 21 besitzen der Dicke und Breite der Spiegel entsprechende Schlitze (siehe Fig. 2). Die Spiegel sind durch diese Schlitze von oben her einführbar und stehen mit ihrer unteren Kante auf der Grundplatte 19. Dadurch ist im Falle von Beschädigungen ein einfacher und schneller Austausch der Spiegel möglich.

Auf der oberen Positionierplatte 21 ist eine Führung 20 befestigt, an der die senkrecht stehend angeordnete Kamera 3 mittels eines Kemmstücks 35 höhenverstellbar gehalten wird Das Klemmstück besitzt außerdem ein Drehgelenk 36 zur Einstellung des Auftreffwinkels der optischen Achse 12 der Kamera 3 auf den darunter auf der Grundplatte 19 angeordneten Spiegel 13.

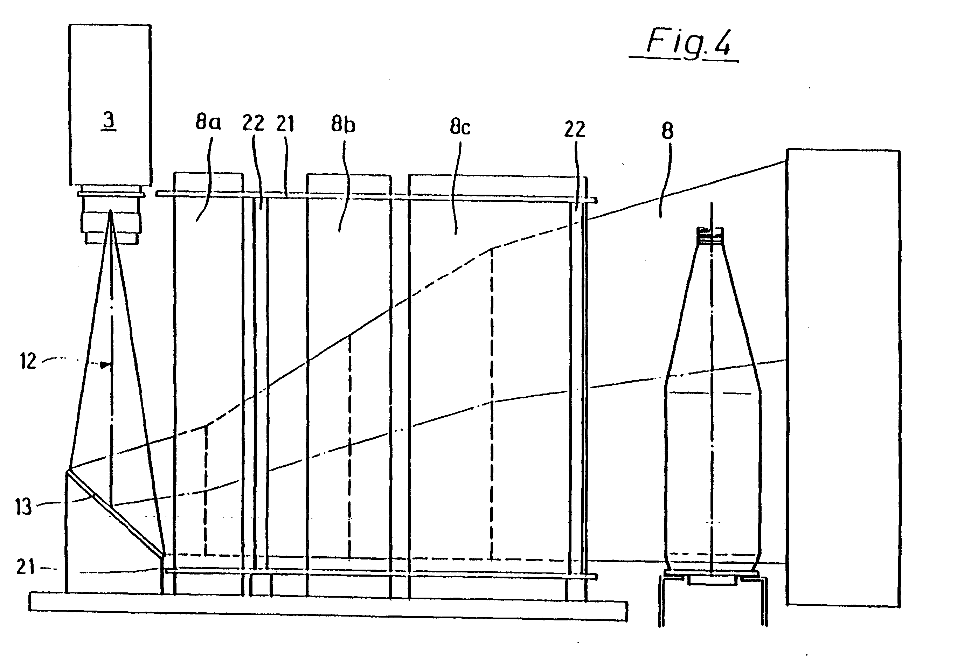

In Fig. 4 sind die dem mittleren Strahlengang 8 zugeordneten Spiegel 8a, 8b und 8c dargestellt, wobei ebenfalls zur besseren Übersicht alle übrigen Spiegel nicht eingezeichnet sind.

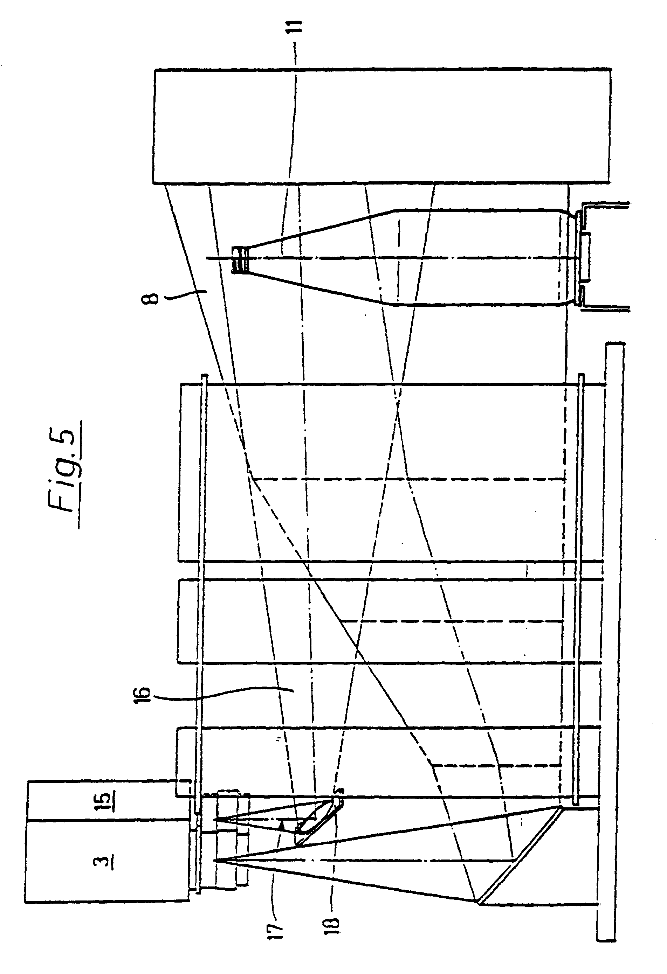

Die Fig. 5 entspricht weitgehend der Fig. 4, wobei zusätzlich die Kamera 15 zur Kontur- und Höhenerkennung mit ihrem Strahlengang 16 angedeutet ist. Wegen der senkrechten Anordnung der Kamera 15 ist ebenfalls ein den Strahlengang 16 aus der senkrechten Richtung quer zur Symmetrielinie 11 der zu prüfenden Flasche 5 umlenkender Spiegel 18 erforderlich. Die zweite Kamera 15 ist in nicht dargestellter Weise, ähnlich wie die Kamera 3, an der oberen Positionierplatte 21 einstellbar befestigt.

Zur Kontur- und Höhenkontrolle reicht die Erfassung des Schulter- und Kopfbereiches der Flaschen 5. Dadurch genügt im Vergleich zu den Strahlengängen der Seitenwandkontrolle eine kürzere Länge des Strahlengangs 17, so dass die Kamera 15 ohne zusätzliche Umlenkspiegel ähnlich nahe an der Flasche 5 angeordnet werden kann, wie die zur Seitenwandkontrolle dienende Kamera 3.

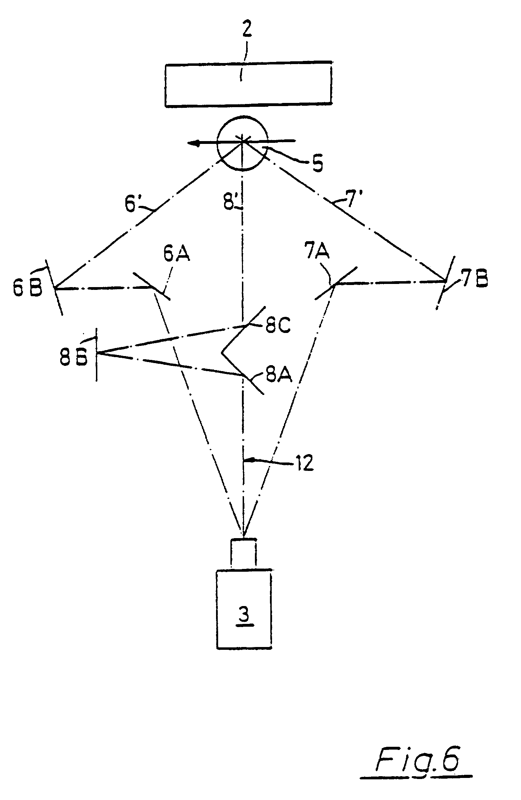

Die Fig. 6 zeigt eine alternative Spiegelanordnung zur Erzeugung der zur Seitenwandkontrolle erforderlichen Strahlengänge. Die dargestellte Spiegelanordnung erzeugt ebenfalls zwei zur optischen Achse 12 der Kamera 3 symmetrisch ausgebildete Strahlengänge 6 und 7, von denen nur die Mittelachsen 6' und 7' dargestellt sind. Zu diesem Zweck sind jeweils Spiegel 6A, 6B und 7A, 7B vorhanden, die mit einem ausreichenden Zwischenabstand zur optischen Achse 12 angeordnet sind, derart, dass die den dritten Strahlengang 8 bildenden Spiegel 8A, B, C vor den vorgenannten Spiegeln der beiden übrigen Strahlengänge plaziert werden können, und der zur Flasche 5 führende Abschnitt des Strahlengangs 8 zwischen den zu den Strahlengängen 6 bis 7 gehörenden Spiegeln ungehindert hindurchtreten kann.

Abweichend von den dargestellten Ausführungen sind auch Spiegelanordnungen denkbar und vorteilhaft, die zur Seitenwandkontrolle mehr als drei Strahlengänge erzeugen.

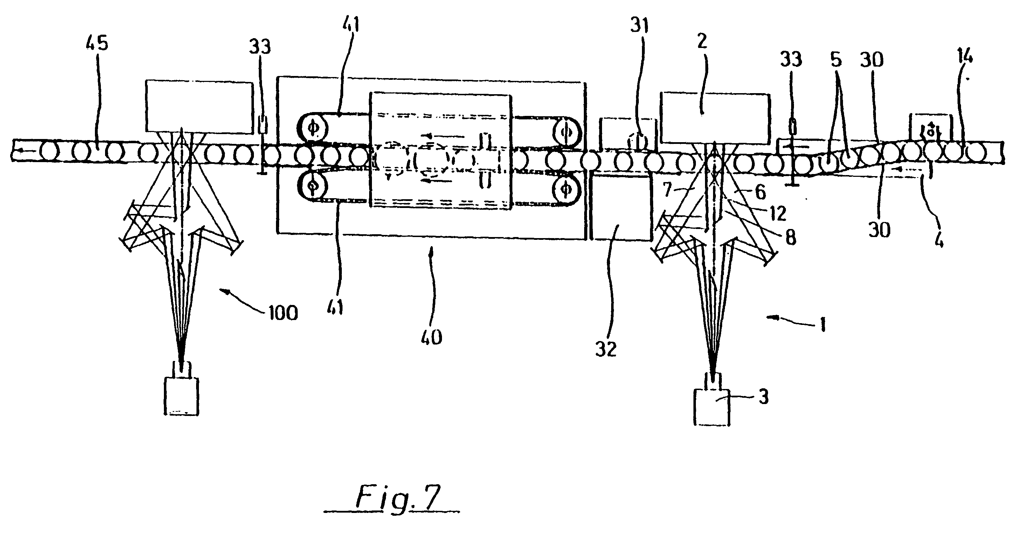

Die in Fig. 7 dargestellte Inspektionsmaschine besitzt grundsätzlich den gleichen mechanischen Aufbau wie die Inspektionsmaschine nach Fig. 1. Zusätzlich verfügt sie aber über eine Inspektionsstation 100 für eine zweite Seitenwandkontrolle der Flaschen 5. Diese Inspektionsstation 100 ist unmittelbar hinter den Riemen 41 der Inspektionsstation 40 am Förderband 45 angeordnet. Die Spiegelanordnung der Inspektionsstation 100 stimmt mit der der Inspektionsstation 1 überein. Beide Riemen 41 werden synchron zu den Förderbändern 4 und 45 angetrieben, allerdings mit einer geringen Geschwindigkeitsdifferenz zueinander. In Abhängigkeit der eingestellten Geschwindigkeitsdifferenz werden die Flaschen während der Überführung vom Förderband 4 auf das Förderband 45 um einen bestimmten Winkel, vorzugsweise ca. 90 Grad, um ihre Hochachse gedreht und anschließend ohne Eigendrehung durch die Inspektionsstation 100 geführt. Nachfolgend kann die Ausscheidung unbrauchbarer Flaschen 5 vorgenommen werden, wie vorhergehend zur Fig. 1 bereits erläutert wurde.

Die Geschwindigkeitsdifferenz zwischen den beiden Riemen 41 ist so einstellbar, dass bei einer Umstellung der Inspektionsmaschine auf Flaschen mit einem anderen Umfangsmaß der Drehwinkel der Flaschen beim Durchfahren der Riemenstrecke konstant 90 Grad beträgt. Zu diesem Zweck ist beispielsweise einer der beiden Riemen 41 antriebsmäßig mit den Förderbändern 4 und/oder 45 verbunden, während der zweite Riemen 41 über einen eigenen, regelbaren Antrieb mit einer programmierbaren Steuerung verfügt. Die Umstellung des Übersetzungsverhältnisses zwischen den beiden Riemen 41 kann dann auf Knopfdruck erfolgen.

Eine Seitenwandkontrolle mit zwei Inspektionsstationen 1 und 100 hat den Vorteil, dass die erforderlichen Zwischenstände im Flaschenstrom klein gehalten werden können, wodurch auch die Flaschentransportgeschwindigkeit bei einer vorgegebenen Leistung niedriger ist, als bei einer Kontrolle der gesamten Flaschenseitenwand mit nur einer Inspektionsstation. Dies ist auf den kleineren Winkel zwischen den Strahlen 6 und 7 zurückzuführen, der gewählt werden kann, z.B.60 Grad, da die Flaschenseitenwand beim Passieren einer der beiden Inspektionsstationen 1 und 100 nicht vollumfänglich aufgenommen werden muß. Zusätzlich ergeben sich durch den kleineren Winkel optische Vorteile bei der Bildäufnahme. Bei einer Seitenwandkontrolle mit nur einer einzigen Inspektionsstation ist dagegen zwischen den Strahlen 6 und 7 ein Winkel von über 100 Grad zur vollständigen Erfassung einer Flaschenseitenwand erforderlich.

## Patentansprüche

1. Inspektionsmaschine für durchleuchtbare Flaschen (5) oder dgl. mit einer Inspektionsstation (1) zur Seitenwandkontrolle, die eine Beleuchtungseinrichtung (2), eine Bildaufnahmeeinrichtung (3) und eine zwischen einer zu prüfenden Flasche und der Bildaufnahmeeinrichtung angeordnete, Strahlengänge erzeugende Spiegelanordnung aufweist, sowie einer die Flaschen (5) einspurig durch die Strahlengänge führende Transporteinrichtung (4), **gekennzeichnet durch** eine Spiegelanordnung (6a bis 8c), die wenigstens drei, die Seitenwand einer zu prüfenden Flasche aus umfänglich verschiedenen Richtungen auf eine gemeinsame Bildaufnahmeeinrichtung abbildende Strahlengänge erzeugt, wobei ein Strahlengang (8) **durch** zwei auf der optischen Achse (12) der Bildaufnahmeeinrichtung (3) liegende Spiegel (8a, 8c) und einen zwischengeschalteten, neben der optischen Achse (12) angeordneten Spiegel (8b) umgelenkt wird, und der neben der optischen Achse positionierte Spiegel (8b) den Strahlengang (8) vom ersten auf den zweiten der beiden auf der optischen Achse liegenden Spiegel (8a, 8c) umlenkt.

2. Inspektionsmaschine nach Anspruch 1, **dadurch gekennzeichnet, dass** sich alle Strahlengänge(6, 7, 8) in einem gemeinsamen Kreuzungsbereich (9) schneiden, durch den die Flaschen(5) mittels der Transporteinrchtung (4) hindurchführbar sind.

3. Inspektionsmaschine nach wenigstens einem der vorhergehenden Ansprüche, **dadurch gekennzeichnet, dass** sich die Mittelachsen (6', 7', 8') aller Strahlengänge (6, 7, 8) in einer gemeinsamen Schnittstelle (10) treffen und die Flaschen (5) mittels der Transporteinrichtung (4) durch die Schnittstelle (10) führbar sind, insbesondere derart, dass die Symmetrielinie (11) der Flaschen in etwa die Schnittstelle (10) passiert und im Augenblick des Zusammentreffens der Symmetrielinie mit dieser Schnittstelle die Bildaufnahme erfolgt.

4. Inspektionsmaschine nach wenigstens einem der vorhergehenden Ansprüche, **dadurch gekennzeichnet, dass** alle Strahlengänge (6, 7, 8) gleich lang sind, insbesondere die Mittelachsen (6', 7', 8') der Strahlengänge von der Bildaufnahmeeinrichtung (3) bis zu einer gemeinsamen Schnittstelle (10) eine übereinstimmende Länge, vorzugsweise im Bereich von 750 bis 1500 mm, insbesondere 1240 mm, aufweisen.

5. Inspektionsmaschine nach wenigstens einem der vorhergehenden Ansprüche, **dadurch gekennzeichnet, dass** die optische Achse (12) der Bildaufnahmeeinrichtung (3) sowohl normal zur Transportrichtung der Flaschen in der Inspektionsstation (1) als auch zumindest abschnittsweise quer zur Symmetrielinie (11) der Flaschen (5) ausgerichtet ist.

6. Inspektionsmaschine nach einem der vorhergehenden Ansprüche, **dadurch gekennzeichnet, dass** zwei Strahlengänge (6, 7) symmetrisch zur optischen Achse (12) der Bildaufnahmeeinrichtung (3) ausgebildet sind, die Strahlengänge vorzugsweise jeweils durch zwei zwischen der Bildaufnahmeeinrichtung (3) und der Beleuchtungseinrichtung (2) angeordnete Spiegel (6a, 6b, und 7a, 7b) umgelenkt werden, derart, dass die Strahlengänge (6, 7), ausgehend von der Bildaufnahmeeinrichtung, zunächst durch ein erstes Paar von Spiegeln (6a, 7a) von der optischen Achse (12) wegweisend und durch ein nachgeordnetes zweites Paar von Spiegeln (6b, 7b) zur optischen Achse (12) hinweisend auf den Seitenwandbereich einer zu prüfenden Flasche (5) gerichtet werden, wobei die Schnittstelle (10) der Mittelachsen (6', 7') der Strahlengänge insbesondere auf der optischen Achse (12) der Bildaufnahmeeinrichtung (3) liegt.

7. Inspektionsmaschine nach wenigstens einem der vorhergehenden Ansprüche, **dadurch gekennzeichnet, dass** zwischen zwei symmetrisch verlaufenden Strahlengängen (6, 7) ein dritter, vorzugsweise mittig ausgerichteter Strahlengang (8) angeordnet ist, wobei dessen Mittelachse (8') zumindest abschnittsweise, mit der optischen Achse (12) der Bildaufnahmeeinrichtung (3) fluchtet.

8. Inspektionsmaschine nach wenigstens einem der vorhergehenden Ansprüche 6 bis 7, **dadurch gekennzeichnet, dass** die dem dritten Strahlengang (8) zugeordneten Spiegel (8A, 8B, 8C) - von der Bildaufnahmeeinrichtung 3 zur Beleuchtungseinrichtung 2 gesehen - vor den Spiegeln (6A, 6B, 7A, 7B) der symmetrisch verlaufenden Strahlengänge (6, 7) angeordnet sind.

9. Inspektionsmaschine nach wenigstens einend der vorhergesehenen Ansprüche, **dadurch gekennzeichnet, dass** zumindest der auf die Seitenwand einer Flasche auftreffende Abschnitt eines dritten Strahlenganges (8) durch einen Zwischenraum zwischen den übrigen Strahlengängen (6, 7) zugeordneten Spiegeln (6A, 6B 7A, 7B) hindurchtreten kann.

10. Inspektionsmaschine nach wenigstens einem der vorhergehenden Ansprüche, **dadurch gekennzeichnet, dass** ein einem dritten Strahlengang (8) zugeordneter Spiegel (8a) vor einem ersten Paar von Spiegeln (6a, 7a) zweier symmetrisch verlaufender Strahlengänge (6, 7) angeordnet ist und ein weiterer Spiegel (8c) dahinter.

11. Inspektionsmaschine nach wenigstens einem der vorhergehenden Ansprüche, **dadurch gekennzeichnet, dass** die optische Achse (12) der Bildaufnahmeeinrichtung (3) abschnittsweise im wesentlichen parallel zur Symmetrielinie (11) der Flaschen (5) ausgerichtet ist und die optische Achse (3) -ausgehend von der Bildaufnahmeeinrichtung (3)- durch einen Spiegel (13) quer zur Symmetrielinie (11) der Flaschen (5) umgelenkt wird.

12. Inspektionsmaschine nach Anspruch 11, **dadurch gekennzeichnet, dass** die Bildaufnahmeeinrichtung (3) seitlich neben der Transporteinrichtung (4) mit Abstand oberhalb deren Förderebene angeordnet ist.

13. Inspektionsmaschine nach wenigstens einem der vorhergehenden Ansprüche, **dadurch gekennzeichnet, dass** zwei Strahlengänge (6, 7) in einem Winkelbereich von 45 bis 80 Grad, insbesondere 60 Grad, bezogen auf ihre Mittelachsen (6', 7'), zueinander ausgerichtet auf eine zu prüfende Flasche (5) treffen.

14. Inspektionsmaschine nach Anspruch 13, **dadurch gekennzeichnet, dass** ein dritter Strahlengang (8) -den von den übrigen Strahlengängen (6, 7) eingeschlossenen Winkel halbierend- auf eine zu prüfende Flasche (5) trifft.

15. Inspektionsmaschine nach wenigstens einem der vorhergehenden Ansprüche, **dadurch gekennzeichnet, dass** die Inspektionsstation (1) eine zweite Bildaufnahmeeinrichtung (15) zur Kontur- und/oder Höhen- und/oder Farberkennung der Flaschen (5) aufweist, wobei deren Strahlengang (16) durch den Kreuzungsbereich (9) der Strahlengänge (6, 7, 8) der Seitenwandkontrolle verläuft, insbesondere die optische Achse (17) im wesentlichen durch die Schnittstelle (10) der Mittelachsen (6', 7', 8') der Strahlengänge der Seitenwandkontrolle verläuft, so dass die Bildaufnahme einer Flasche durch beide Bildaufnahmeeinrichtungen (3, 15) in etwa zeitgleich erfolgen kann.

16. Inspektionsmaschine nach Anspruch 15, **dadurch gekennzeichnet, dass** die optische Achse (17) der zweiten Bildaufnahmeeinrichtung (15) abschnittsweise im wesentlichen parallel zur Symmetrielinie (11) der Flaschen (5) verläuft und durch einen Spiegel (18) quer zur Symmetrielinie (11) der Flaschen (5) umgelenkt wird.

17. Inspektionsmaschine nach wenigstens einem der Ansprüche 15 oder 16, **dadurch gekennzeichnet, dass** die quer zur Symmetrielinie (11) der Flaschen (5) zusammenlaufenden Abschnitte der optischen Achsen (12, 17) der Bildaufnahmeeinrichtungen (3, 15) einen spitzen Winkel im Bereich von vorzugsweise 15 bis 35 Grad, insbesondere 25 Grad, einschließen.

18. Inspektionsmaschine nach wenigstens einem der vorhergehenden Ansprüche, **dadurch gekennzeichnet, dass** die Spiegel (6a, 6b, 7a, 7b, 8a, 8b, 8c, 13) auf einer gemeinsamen Grundplatte (19) stehend angeordnet sind.

19. Inspektionsmaschine nach Anspruch 18 **dadurch gekennzeichnet, dass** die Spiegel (6a, 6b, 7a, 7b, 8a, 8b, 8c) durch parallel angeordnete, mit Schlitzen ausgestattete Positionierplatten (21) gehalten werden.

20. Inspektionsmaschine nach wenigstens einem der vorhergehenden Ansprüche, **dadurch gekennzeichnet, dass** die Bildaufnahmeeinrichtungen (3, 15) eine Flächenmatrix besitzen, wobei insbesondere die Strahlengänge (6, 7, 8) der Seitenwandkontrolle nebeneinander auf der Flächenmatrix der Bildaufnahmeeinrichtung (3) abgebildet werden.

21. Inspektionsmaschine nach wenigstens einem der vorhergehenden Ansprüche, **dadurch gekennzeichnet, dass** die Bildaufnahme durch elektronische Kameras, insbesondere CCD-Kameras, erfolgt.

22. Inspektionsmaschine nach wenigstens einem der vorhergehenden Ansprüche, **dadurch gekennzeichnet, dass** die Flaschen (5) zur Seitenwandkontrolle nacheinander zwei Inspektionsstationen (1, 100) in unterschiedlichen Drehstellungen durchlaufen.

23. Inspektionsmaschine nach Anspruch 22, **dadurch gekennzeichnet, dass** zwischen den Inspektionsstationen (1, 100) eine Vorrichtung zum Drehen der Flaschen (5) angeordnet ist, vorzugsweise bestehend aus zwei gegenüberliegend an der Mantelfläche der Flaschen angreifenden Riemen (41), die mit unterschiedlicher Geschwindigkeit synchron zur Transporteinrichtung (4) antreibbar sind.

24. Inspektionsmaschine nach Anspruch 23, **dadurch gekennzeichnet, dass** zwischen den an den Flaschen angreifenden Riemen (41) eine Geschwindigkeitsdifferenz zur Drehung der Flaschen einstellbar ist, derart, dass bei einer Umstellung auf Flaschen mit einem anderen Umfangsmaß der Drehwinkel der Flaschen beim Durchlaufen der Riemen (41) konstant bleibt.

## Claims

1. Inspection machine for translucent bottles (5) or the like, comprising an inspection station (1) for sidewall control which includes an illumination device (2), an image recording device (3) and a mirror arrangement which is located between a bottle under test and the image recording device and produces lightbeams, and a transport device (4) which guides the bottles (5) on single track through the lightbeams, **characterised by** a mirror arrangement (6a to 8c) which produces at least three lightbeams which image the sidewall of a bottle under test from peripherally different directions onto a common image recording device, and one lightbeam (8) is deflected by two mirrors (8a, 8c) located on the optical axis (12) of the image recording device (3) and a mirror (8b) arranged thereinbetween and alongside the optical axis (12), and the mirror (8b) positioned alongside the optical axis deflects the lightbeam (8) from the first to the second of the two mirrors (8a, 8c) which are located on the optical axis.

2. Inspection machine according to Claim 1, **characterised in that** all lightbeams (6, 7, 8) intersect in a common intersecting area (9) through which the bottles (5) are transported by means of the transport device (4).

3. Inspection machine according to at least one of the above claims, **characterised in that** the centre axes (6', 7', 8') of all lightbeams (6, 7, 8) coincide in a common intersecting point (10), and the bottles (5) are guided by means of the transport device (4) through the intersecting point (10), in particular in such a manner that the line of symmetry (11) of the bottles virtually passes the intersecting point (10), and an image is recorded at the moment of coincidence of the line of symmetry with said intersecting point.

4. Inspection machine according to at least one of the above claims, **characterised in that** all lightbeams (6, 7, 8) are of identical length; in particular the centre axes (6', 7', 8') of the lightbeams from the image recording device (3) up to a common intersecting point (10) have a coinciding length, preferably between 750 and 1,500 mm, in particular 1,240 m.

5. Inspection machine according to at least one of the above claims, **characterised in that** the optical axis (12) of the image recording device (3) is aligned both normally to the transport direction of the bottles in the inspection station (1) and at least sectionally transversely to the line of symmetry (11) of the bottles (5).

6. Inspection machine according to one of the above claims, **characterised in that** two lightbeams (6, 7) are set symmetrically to the optical axis (12) of the image recording device (3), the lightbeams are deflected preferably by two respective mirrors (6a, 6b and 7a, 7b) arranged between the image recording device (3) and the illuminating device (2) so that the lightbeams (6, 7) are oriented from the image recording device initially through a first pair of mirrors (6a, 7a) away from the optical axis (12) and through a downstream second pair of mirrors (6b, 7b) towards the optical axis (12) to the sidewall area of a bottle under test (5), and the intersecting point (10) of the centre axes (6', 7') of the lightbeams lies in particular on the optical axis (12) of the image recording device (3).

7. Inspection machine according to at least one of the above claims, **characterised in that** between two symmetrically extending lightbeams (6, 7) is arranged a third, preferably centrally oriented lightbeam (8), and its centre axis (8') is at least sectionally flush with the optical axis (12) of the image recording device (3).

8. Inspection machine according to at least one of the above Claims 6 to 7, **characterised in that** that the mirrors (8A, 8B, 8C) which are associated with the third lightbeam (8) are arranged, as seen from image recording device 3 to illuminating device 2, in front of the mirrors (6A, 6B, 7A, 7B) of the symmetrically extending lightbeams (6, 7).

9. Inspection machine according to at least one of the above claims, **characterised in that** at least the section of a third lightbeam (8) coinciding with the sidewall of a bottle can pass through an intermediate space between the mirrors (6A, 6B, 7A, 7B) which are associated with the remaining lightbeams (6, 7).

10. Inspection machine according to at least one of the above claims, **characterised in that** a mirror (8a) associated with a third lightbeam (8) is arranged in front of a first pair of mirrors (6a, 7a) of two symmetrically extending lightbeams (6, 7), and therebehind a further mirror (8c).

11. Inspection machine according to at least one of the above claims, **characterised in that** the optical axis (12) of the image recording machine (3) is sectionally oriented essentially parallel to the line of symmetry (11) of the bottles (5), and the optical axis (3), commencing from the image recording device (3), is deflected by a mirror (13) transversely to the line of symmetry (11) of the bottles (5).

12. Inspection machine according to Claim 11, **characterised in that** the image recording device (3) is arranged laterally along the transport device (4) at a distance above its conveying plane.

13. Inspection machine according to at least one of the above claims, **characterised in that** two lightbeams (6, 7) at an angular range of between 45 and 80 degrees, in particular 60 degrees, coincide with a bottle under test (5) relative to the centre axes (6', 7').

14. Inspection machine according to Claim 13, **characterised in that** a third lightbeam (8) coincides with a bottle under test (5) whilst halving the angle included by the remaining lightbeams (6, 7).

15. Inspection machine according to at least one of the above claims, **characterised in that** the inspection station (1) comprises a second image recording device (15) for contour and/or height and/or colour recognition of the bottles (5), and its lightbeam (16) extends through the intersecting area (9) of the lightbeams (6, 7, 8) of the sidewall control, in particular the optical axis (17) essentially through the intersecting point (10) of the centre axes (6', 7', 8') of the light beams of the sidewall control, so that image recording of a bottles can be carried out by both image recording devices (3, 15) at approximately the same time.

16. Inspection machine according to Claim 15, **characterised in that** the optical axis (17) of the second image recording device (15) extends sectionally essentially parallel to the line of symmetry (11) of the bottles (5) and is deflected by a mirror (18) transversely to the symmetry line (11) of the bottles (5).

17. Inspection machine according to at least one of Claims 15 or 16, **characterised in that** the section of the optical axes (12, 17) of the image recording devices (3, 15) which coincide transversely to the line of symmetry (11) of the bottles (5) include an acute angle in the range of preferably between 15 and 35 degrees, in particular 25 degrees.

18. Inspection machine according to at least one of the above claims, **characterised in that** mirrors (6a, 6b, 7a, 7b, 8a, 8b, 8c, 13) are arranged to stand on a common base plate (19).

19. Inspection machine according to Claim 18, **characterised in that** the mirror (6a, 6b, 7a, 7b, 8a, 8b, 8c) is held by parallel positioning plates (21) which are provided with slots.

20. Inspection machine according to at least one of the above claims, **characterised in that** the image recording devices (3, 15) include a surface matrix, and in particular the lightbeams (6, 7, 8) of the sidewall control are imaged alongside each other on the surface matrix of the image recording device (3).

21. Inspection machine according to at least one of the above claims, **characterised in that** the image recording is made by means of an electronic camera, in particular CCD cameras.

22. Inspection machine according to at least one of the above claims, **characterised in that** the bottles (5) pass towards the side wall control one after the other two inspection stations (1, 100) at different rotary positions.

23. Inspection machine according to Claim 22, **characterised in that** between the inspection stations (1, 100) is arranged a device for rotating the bottles (5), preferably composed of two belts (41) positioned opposite each other at the casing surface of the bottles, which can be driven at different speed synchronously to the transport device (4).

24. Inspection machine according to Claim 23, **characterised in that** between the belts (41) which engage the bottles is set a difference in speed for rotation of the bottles in such a manner that the rotary angle of the bottles whilst passing the belts (41) remains constant when resetting to bottles of a different peripheral size.

## Revendications

1. Machine d'inspection pour des bouteilles (5) qu'on peut examiner à la lumière ou autres comparables, avec pour contrôler les parois un poste d'inspection qui présente une installation d'éclairage (2), une installation de prise de vue (3) et un arrangement de miroirs qui est placé entre une bouteille à contrôler et l'installation de prise de vue et qui produit des trajectoires de faisceau, ainsi qu'avec une installation de transport (4) qui guide les bouteilles (5) sur une seule voie à travers les trajectoires de faisceau,
**caractérisée par**
un arrangement de miroirs (6a à 8c) qui produit au moins trois trajectoires de faisceau qui reproduisent la paroi d'une bouteille à contrôler à partir d'un grand nombre de directions différentes sur une installation de prise de vue commune, une trajectoire de faisceau (8) étant déviée par deux miroirs (8a, 8c) placés sur l'axe optique (12) de l'installation de prise de vue (3) et par un miroir (8b) intercalé disposé à côté de l'axe optique (12), le miroir (8b) placé à côté de l'axe optique déviant la trajectoire de faisceau (8) depuis le premier sur le deuxième des deux miroirs (8a, 8c) disposés sur l'axe optique.

2. Machine d'inspection selon la revendication 1,
**caractérisée en ce que**
toutes les trajectoires de faisceau (6, 7, 8) se coupent dans une zone d'intersection (9) commune dans laquelle on peut faire passer les bouteilles (5) au moyen de l'installation de transport (4).

3. Machine d'inspection selon au moins l'une des revendications précédentes,
**caractérisée en ce que**
les axes médians (6', 7', 8') de toutes les trajectoires de faisceau (6, 7, 8) se rencontrent à un point d'intersection (10) commun et les bouteilles (5) peuvent être conduites à travers le point d'intersection (10) au moyen de l'installation de transport (4), en particulier de telle manière que la ligne de symétrie (11) des bouteilles passe quasiment au point d'intersection (10) et la prise de vue a lieu au moment de la rencontre de la ligne de symétrie avec ce point d'intersection.

4. Machine d'inspection selon au moins l'une des revendications précédentes,
**caractérisée en ce que**
toutes les trajectoires de faisceau (6, 7, 8) ont la même longueur, en particulier les axes médians (6', 7', 8') des trajectoires de faisceau depuis l'installation de prise de vue (3) jusqu'à un point d'intersection (10) commun présentent une longueur concordante, comprise de préférence entre 750 et 1 500 mm, en particulier de 1 240 mm.

5. Machine d'inspection selon au moins l'une des revendications précédentes,
**caractérisée en ce que**
l'axe optique (12) de l'installation de prise de vue (3) est dirigé aussi bien à la normale de la direction de transport des bouteilles dans le poste d'inspection (1) que, au moins par segments, transversalement à la ligne de symétrie (11) des bouteilles (5).

6. Machine d'inspection selon l'une des revendications précédentes,
**caractérisée en ce que**
deux trajectoires de faisceau (6, 7) sont formées symétriquement à l'axe optique (12) de l'installation de prise de vue (3), les trajectoires de faisceau sont déviées de préférence chacune par deux miroirs (6a, 6b et 7a, 7b) placés entre l'installation de prise de vue (3) et l'installation d'éclairage (2) de telle manière que les trajectoires de faisceau (6, 7) sont orientées, à partir de l'installation de prise de vue, sur la zone de paroi d'une bouteille (5) à contrôler d'abord par une première paire de miroirs (6a, 7a) qui divergent de l'axe optique (12) et par une deuxième paire de miroirs (6b, 7b) en aval qui sont dirigés vers l'axe optique (12), le point d'intersection (10) des axes médians (6', 7') des trajectoires de faisceau se trouvant en particulier sur l'axe optique (12) de l'installation de prise de vue (3).

7. Machine d'inspection selon au moins l'une des revendications précédentes,
**caractérisée en ce qu'**
une troisième trajectoire de faisceau (8), de préférence orientée centralement, est placée entre deux trajectoires de faisceau (6, 7) qui s'étendent symétriquement, leur axe médian (8') étant au moins par segments aligné avec l'axe optique (12) de l'installation de prise de vue (3).

8. Machine d'inspection selon au moins l'une des revendications précédentes 6 à 7,
**caractérisée en ce que**
les miroirs (8A, 8B, 8C) associés à la troisième trajectoire de faisceau (8) - vus de l'installation de prise de vue 3 vers l'installation d'éclairage 2 - sont disposés devant les miroirs (6A, 6B, 7A, 7B) des trajectoires de faisceau (6, 7) qui s'étendent symétriquement.

9. Machine d'inspection selon au moins l'une des revendications précédentes,
**caractérisée en ce qu'**
au moins le segment d'une troisième trajectoire de faisceau (8) qui touche la paroi d'une bouteille peut traverser un espace intermédiaire entre les miroirs (6A, 6B, 7A, 7B) associés aux autres trajectoires de faisceau (6, 7).

10. Machine d'inspection selon au moins l'une des revendications précédentes,
**caractérisée en ce qu'**
un miroir (8a) associé à une troisième trajectoire de faisceau (8) est placé devant une première paire de miroirs (6a, 7a) de deux trajectoires de faisceau (6, 7) qui s'étendent symétriquement et un autre miroir (8c) derrière.

11. Machine d'inspection selon au moins l'une des revendications précédentes,
**caractérisée en ce que**
l'axe optique (12) de l'installation de prise de vue (3) est par segments orienté presque parallèlement à la ligne de symétrie (11) des bouteilles (5) et l'axe optique (3) - à partir de l'installation de prise de vue (3) - est dévié transversalement à la ligne de symétrie (11) des bouteilles (5) par un miroir (13).

12. Machine d'inspection selon la revendication 11,
**caractérisée en ce que**
l'installation de prise de vue (3) est disposée latéralement à côté de l'installation de transport (4) à distance au-dessus de son plan de convoyage.

13. Machine d'inspection selon au moins l'une des revendications précédentes,
**caractérisée en ce que**
deux trajectoires de faisceau (6, 7) orientées l'une vers l'autre selon un angle compris entre 45 et 80 degrés, en particulier de 60 degrés, par rapport à leurs axes médians (6', 7') arrivent sur une bouteille (5) à contrôler.

14. Machine d'inspection selon la revendication 13,
**caractérisée en ce qu'**
une troisième trajectoire de faisceau (8) - qui partage en deux l'angle que font les autres trajectoires de faisceau (6, 7) - arrive sur une bouteille (5) à contrôler.

15. Machine d'inspection selon au moins l'une des revendications précédentes,
**caractérisée en ce que**
le poste d'inspection (1) présente une deuxième installation de prise de vue (15) pour reconnaître le contour et/ou la hauteur et/ou la couleur des bouteilles (5), sa trajectoire de faisceau (8) passant par la zone d'intersection (9) des trajectoires de faisceau (6, 7, 8) du contrôle de paroi, l'axe optique (17) passant en particulier pratiquement par le point d'intersection (10) des axes médians (6', 7', 8') des trajectoires de faisceau du contrôle de paroi, de sorte que la prise de vue d'une bouteille peut avoir lieu presque en même temps par les deux installations de prise de vue (3, 15).

16. Machine d'inspection selon la revendication 15,
**caractérisée en ce que**
l'axe optique (17) de la deuxième installation de prise de vue (15) s'étend par segments presque parallèlement à la ligne de symétrie (11) des bouteilles (5) et est dévié transversalement à la ligne de symétrie (11) des bouteilles (5) par un miroir (18).

17. Machine d'inspection selon au moins l'une des revendications 15 ou 16,
**caractérisée en ce que**
les segments des axes optiques (12, 17) - qui convergent transversalement par rapport à la ligne de symétrie (11) des bouteilles (5) - des installations de prise de vue (3, 15) forment un angle aigu compris de préférence entre 15 et 35 degrés, en particulier de 25 degrés.

18. Machine d'inspection selon au moins l'une des revendications précédentes,
**caractérisée en ce que**
les miroirs (6a, 6b, 7a, 7b, 8a, 8b, 8c, 13) sont disposés debout sur une plaque de base (19) commune.

19. Machine d'inspection selon la revendication 18,
**caractérisée en ce que**
les miroirs (6a, 6b, 7a, 7b, 8a, 8b, 8c) sont maintenus par des plaques de positionnement (21) disposées parallèlement et munies de fentes.

20. Machine d'inspection selon au moins l'une des revendications précédentes,
**caractérisée en ce que**
les installations de prise de vue (3, 15) possèdent une matrice de surface, les trajectoires de faisceau (6, 7, 8, ) du contrôle des parois étant en particulier représentées les unes à côté des autres sur la matrice de surface de l'installation de prise de vue (3).

21. Machine d'inspection selon au moins l'une des revendications précédentes,
**caractérisée en ce que**
la prise de vue est réalisée par des caméras électroniques, en particulier par des caméras CCD.

22. Machine d'inspection selon au moins l'une des revendications précédentes,
**caractérisée en ce que**
les bouteilles (5) pour le contrôle de paroi traversent deux postes d'inspection (1, 100) successivement dans différentes positions de rotation.

23. Machine d'inspection selon la revendication 22,
**caractérisée en ce qu'**
entre les postes d'inspection (1, 100), est placé un dispositif pour tourner les bouteilles (5) composé de préférence de deux courroies (41) qui sont appliquées de façon opposée sur la surface extérieure des bouteilles et qui peuvent être entraînées selon différentes vitesses de façon synchrone avec l'installation de transport (4).

24. Machine d'inspection selon la revendication 23,
**caractérisée en ce que**
l'on peut régler une différence de vitesse entre les courroies (41) qui sont appliquées sur les bouteilles pour tourner les bouteilles de telle manière que l'angle de rotation des bouteilles reste constant lors du passage de la courroie (41) lorsqu'on passe à des bouteilles qui ont une autre dimension de circonférence.
